# EUROPEAN PATENT APPLICATION

(11) **EP 4 564 479 A1**
(43) Date of publication of application: **04.06.2025**
(21) Application number: 23846381.4
(22) Date of filing: 21.07.2023
(51) Int. Cl.: H01M 4/525, H01M 4/36, H01M 4/505

(54) **COATED LITHIUM-TRANSITION METAL OXIDE PARTICLES, METHOD FOR PRODUCING SAME, POSITIVE ELECTRODE ACTIVE MATERIAL FOR LITHIUM ION BATTERY, AND LITHIUM ION BATTERY**

(30) Priority: 29.07.2022 JP 2022122193
(71) Applicant: DKS Co. Ltd., Kyoto-shi, Kyoto 600-8873 (JP); SHINSHU UNIVERSITY, Matsumoto City, Nagano, 390-8621 (JP)
(72) Inventor: HOSHIHARA Yuji, Kyoto-shi, Kyoto 6008873 (JP); KAJI Soki, Kyoto-shi, Kyoto 6008873 (JP); HIGASHIZAKI Tetsuya, Kyoto-shi, Kyoto 6008873 (JP); ZETTSU Nobuyuki, Nagano City, Nagano 3808553 (JP); MAYEESHA Marium, Nagano City, Nagano 3808553 (JP)
(74) Representative: Kuhnen & Wacker Patent- und Rechtsanwaltsbüro PartG mbB
(86) International application number: PCT/JP2023/026701
(87) International publication number: WO 2024/024650

(57) **Abstract**

The input-output characteristics of a lithium-ion battery are improved. In coated lithium-transition metal oxide particles, at least a part of the surfaces of lithium-transition metal oxide particles are coated with a copolymer which is represented by the formula (1) and which has a weight average molecular weight of 200,000 to 600,000, and the copolymer is cross-linked by ring opening of an oxetane ring. In the formula (1), m and n represent a number of one or more. R¹ and R² represent a hydrogen atom or a methyl group. R³ represents an alkyl group having one to five carbon atoms. R⁴ represents an alkanediyl group having one to five carbon atoms. R⁵ represents a hydrogen atom or an alkyl group having one to five carbon atoms.

## Description

### Technical Field

Embodiments of the present invention relate to coated lithium-transition metal oxide particles and a production method thereof. Embodiments of the invention also relate to a lithium-ion battery cathode active material containing the coated lithium-transition metal oxide particles and a lithium-ion battery using the cathode active material.

### Background Art

Battery characteristics of lithium-ion batteries, such as the input-output characteristics, are required to be improved. For example, PTL 1 discloses that a nonaqueous electrolyte obtained by blending a copolymer of methyl methacrylate and (3-ethyloxetan-3-yl)methyl methacrylate with a supporting salt, an aprotic solvent and vinylene carbonate and performing cross-linking is used as a nonaqueous electrolyte of a lithium-ion battery to improve the output characteristics and the cycle characteristics.

Moreover, it is known to coat cathode active material particles of a lithium-ion battery with a polymer. For example, PTL 2 discloses that a cathode active material coated with a nitrile group-containing acrylic polymer is used as a cathode active material to improve the cycle characteristics at a high electric potential. The polymer containing a nitrile group, however, imposes large environmental burden and thus has not been put into practice.

### Citation List

### Patent Literature

PTL 1: JP7047181B
PTL 2: WO2014/088070

### Summary of Invention

### Technical Problem

An object of the embodiments of the invention is to provide coated lithium-transition metal oxide particles which can be used as a cathode active material suitable for improving the input-output characteristics of a lithium-ion battery.

### Solution to Problem

The invention includes the embodiments shown below.
[1] A coated lithium-transition metal oxide particle
   in which at least a part of the surface of a lithium-transition metal oxide particle is coated with a copolymer which is represented by the following general formula (1) and which has a weight average molecular weight of 200,000 to 600,000, 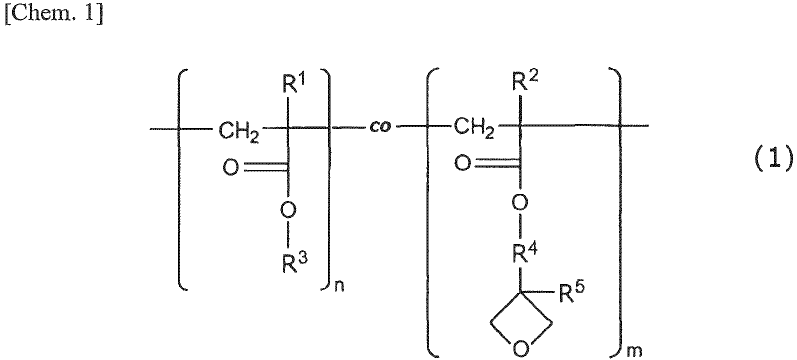
   wherein in the formula (1), m and n each independently represent a number of one or more, R¹ and R² each independently represent a hydrogen atom or a methyl group, R³ represents an alkyl group having one to five carbon atoms, R⁴ represents an alkanediyl group having one to five carbon atoms, and R⁵ represents a hydrogen atom or an alkyl group having one to five carbon atoms, and
   in which the copolymer is cross-linked by ring opening of an oxetane ring.
[2] The coated lithium-transition metal oxide particle according to [1], wherein the amount of the copolymer is 0.7 to 5 mass%.
[3] A lithium-ion battery cathode active material containing the coated lithium-transition metal oxide particle according to [1] or [2].
[4] A lithium-ion battery having a cathode containing the lithium-ion battery cathode active material according to [3].
[5] A method for producing coated lithium-transition metal oxide particles including a step of heating a mixture containing lithium-transition metal oxide particles, a copolymer which is represented by the general formula (1) above and which has a weight average molecular weight of 200,000 to 600,000 and a polymerization initiator.
[6] The method for producing coated lithium-transition metal oxide particles according to [5], wherein the amount of the polymerization initiator per total 100 parts by mass of the copolymer and the polymerization initiator is one to five parts by mass in the mixture.
[7] The method for producing coated lithium-transition metal oxide particles according to [5] or [6], wherein the amount of the copolymer per 100 mass% of the coated lithium-transition metal oxide particles is 0.7 to 5 mass%.

### Advantageous Effects of Invention

With the embodiments of the invention, coated lithium-transition metal oxide particles which can be used as a cathode active material suitable for improving the input-output characteristics of a lithium-ion battery can be provided.

### Description of Embodiments

In the coated lithium-transition metal oxide particles according to the embodiment, the particle surfaces of lithium-transition metal oxide particles are coated with an acrylic polymer having an oxetane ring, and the acrylic polymer is cross-linked by ring opening of the oxetane ring.

### [Lithium-Transition Metal Oxide Particles]

As the lithium-transition metal oxide particles, particles of a complex oxide of lithium and a transition metal, namely particles of a lithium-containing complex metal oxide, can be used. For example, lithium-containing complex metal oxide powder which is generally used as a lithium-ion battery cathode active material can be used. Here, powder refers to aggregate of particles.

Examples of the transition metal constituting the lithium-transition metal oxide particles include Ni, Co, Mn, Ti, V, Cr, Fe, Cu, Mo and the like. Of these, as the transition metal, at least one kind selected from the group consisting of Ni, Co and Mn is preferable. Accordingly, the lithium-transition metal oxide particles according to a preferable embodiment are lithium-containing complex metal oxide particles containing at least one kind selected from the group consisting of Ni, Co and Mn.

Specific examples of the lithium-transition metal oxide particles include lithium-containing nickel oxide, lithium-containing cobalt oxide, lithium-containing manganese oxide, lithium-containing nickel cobalt oxide, lithium-containing nickel cobalt manganese oxide and the like. The oxides may be doped with Al, Mg, Ca, Ba, F (fluorine), B (boron) or the like (for example, a lithium complex oxide of nickel cobalt aluminum or the like) but do not have to be doped. Any one kind of the oxides may be used, or two or more kinds thereof may be used in combination.

In an embodiment, the lithium-transition metal oxide particles may be lithium-containing nickel cobalt manganese oxide particles represented by LiₓNiₐCo_{b}Mn_{c}O₂. Here, x is 0.5 to 1.2. a, band c satisfy a> 0, b > 0 and c > 0, and a + b + c = 1.

The average particle size of the lithium-transition metal oxide particles is not particularly limited and may be, for example, 1 to 30 µm or 3 to 15 µm. In the present specification, the "average particle size" refers to the "number average particle size". The average particle size can be measured using a laser diffraction/scattering particle size distribution analyzer or the like.

### [Acrylic Polymer Having Oxetane Ring]

As the acrylic polymer having an oxetane ring which coats the lithium-transition metal oxide particles, the copolymer represented by the following general formula (1) (called the "copolymer (1)" below) is used.

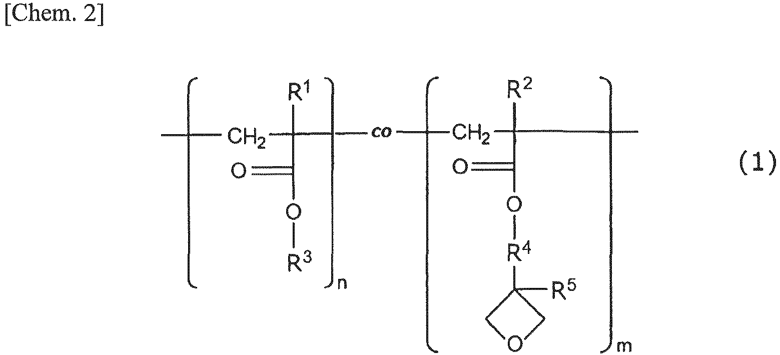

In the formula (1), m and n each independently represent a number of one or more. R¹ and R² each independently represent a hydrogen atom or a methyl group. R³ represents an alkyl group having one to five carbon atoms. R⁴ represents an alkanediyl group having one to five carbon atoms. R⁵ represents a hydrogen atom or an alkyl group having one to five carbon atoms.

The copolymer (1) is a copolymer of an alkyl (meth)acrylate and a (meth)acrylic acid ester having an oxetane ring. Here, "(meth)acrylic acid" means acrylic acid and/or methacrylic acid. In the formula (1), the constituent unit on the left side of "-co-" is derived from the alkyl (meth)acrylate. The constituent unit on the right side of "-co-" is derived from the (meth)acrylic acid ester having an oxetane ring (a four-membered cyclic ether structure). "-co-" means that the arrangement of the constituent units is not specified. Accordingly, the copolymer (1) may be a random copolymer or a block copolymer.

R¹ and R² are preferably both methyl groups. Thus, the copolymer (1) is preferably a copolymer of an alkyl methacrylate and a methacrylic acid ester having an oxetane ring.

R³ represents an alkyl group having one to five carbon atoms as described above and may be a linear alkyl group or a branched alkyl group. R³ is preferably an alkyl group having one to three carbon atoms, more preferably a methyl group.

R⁴ represents an alkanediyl group (namely, a divalent group formed by removing two hydrogen atoms from an alkane) having one to five carbon atoms as described above and may be linear or branched. R⁴ is preferably an alkanediyl group having one to three carbon atoms, more preferably a methylene group.

R⁵ represents a hydrogen atom or an alkyl group having one to five carbon atoms as described above, and the alkyl group may be linear or branched. R⁵ is preferably a hydrogen atom or an alkyl group having one to three carbon atoms. More preferably, R⁵ is a methyl group or an ethyl group.

In an embodiment, the copolymer (1) is preferably a copolymer of methyl methacrylate (MMA) and (3-ethyloxetan-3-yl)methyl methacrylate (OXMA) represented by the following formula (2). 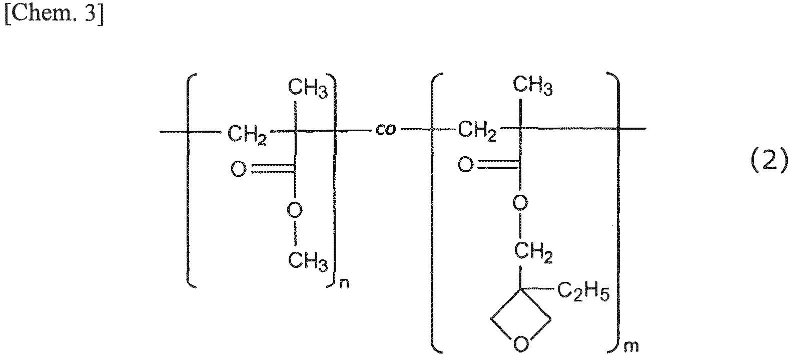 (m and n in the formula (2) are the same as m and n in the formula (1).)

The weight average molecular weight (Mw) of the copolymer (1) is 200,000 to 600,000, preferably 300,000 to 550,000, and may be 400,000 to 500,000. The number average molecular weight (Mn) of the copolymer (1) is not particularly limited and may be, for example, 50,000 to 200,000, 80,000 to 180,000 or 100,000 to 150,000.

n in the formula (1) represents the number of constituent units derived from the alkyl (meth)acrylate (called the constituent unit 1 below) (degree of polymerization) and is a number of one or more. m in the formula (1) represents the number of constituent units derived from the (meth)acrylic acid ester having an oxetane ring (called the constituent unit 2 below) (degree of polymerization) and is a number of one or more. The ratio of the number m of the constituent units 2 to the number n of the constituent units 1, m/n, is not particularly limited but is preferably 0.1 to 3.0, more preferably 0.1 to 1.0, further preferably 0.1 to 0.5, and may further be 0.12 to 0.33 or 0.15 to 0.25. m and n are not particularly limited as long as the weight average molecular weight and m/n satisfy the above ranges, and, for example, n may be 100 to 1600 or 500 to 1300. m may be 40 to 900 or 60 to 500.

Here, the weight average molecular weight Mw and the number average molecular weight Mn of the copolymer (1) are measured in terms of polystyrene by gel permeation chromatography (GPC). m/n is the contained ratio by mole of the constituent unit 2 and the constituent unit 1 (m/n) determined by ¹H-NMR measurement. n and m are calculated from the number average molecular weight Mn of the copolymer (1) and the ratio m/n. Thus, n and m represent average values and are not always an integer.

The copolymer (1) is preferably substantially composed of the constituent unit 1 and the constituent unit 2 only as the constituent units derived from monomers but may contain a constituent unit derived from another monomer in the range in which the effects thereof are not impaired. Although it is not particularly limited, the total amount of the constituent unit 1 and the constituent unit 2, per 100 mol% of all the constituent units derived from monomers, is preferably 90 mol% or more, more preferably 95 mol% or more, further preferably 99 mol% or more, and may be 100 mol%. As the constituent unit derived from another monomer, in view of the environmental burden, no constituent unit derived from a nitrile group-containing monomer is preferably contained.

The copolymer (1) can be obtained by radical copolymerization of an alkyl (meth)acrylate and a (meth)acrylic acid ester having an oxetane ring.

### [Coated Lithium-Transition Metal Oxide Particles]

In the coated lithium-transition metal oxide particles, the particle surfaces of lithium-transition metal oxide particles are coated with the copolymer (1), and the copolymer (1) are cross-linked by ring opening of the oxetane ring. Accordingly, a coating layer containing a cross-linked material of the copolymer (1) is formed on the particle surfaces of the lithium-transition metal oxide particles, and the coating layer is formed on a part of the particle surfaces or the entire surfaces. The coating layer is preferably provided to cover the entire particle surfaces. Because the particle surfaces of the lithium-transition metal oxide particles are coated with the cross-linked material of the copolymer (1), the internal resistance decreases, and the input-output characteristics of the lithium-ion battery can be improved as a result, when the particles are used as a cathode active material of a lithium-ion battery.

In the copolymer (1), the oxetane ring in the constituent unit 2 is opened by cross-linking. Thus, in the coating layer, the cross-linked material does not have to contain one having the structure of the constituent unit 2 represented by the formula (1) as it is. Alternatively, the oxetane ring of a part of the constituent unit 2 may remain without being opened.

In the coated lithium-transition metal oxide particles, the amount of the copolymer (1) is preferably 0.7 to 5 mass%. That is, the copolymer (1) content per 100 mass% of the coated lithium-transition metal oxide particles is preferably 0.7 to 5 mass%. By setting the amount of the copolymer (1) in the above range, the effect of improving the input-output characteristics can be enhanced. The amount of the copolymer (1) is preferably 0.8 to 3 mass%, more preferably 0.9 to 2 mass%, further preferably 0.9 to 1.5 mass%.

The coating layer formed on the particle surfaces of the coated lithium-transition metal oxide particles may be composed of the cross-linked material of the copolymer (1) only but may contain another polymer, an additive or the like in the range in which the effects thereof are not impaired.

The average particle size of the coated lithium-transition metal oxide particles is not particularly limited and may be, for example, 1 to 30 µm or 3 to 15 µm.

### [Production Method of Coated Lithium-Transition Metal Oxide Particles]

The method for producing the coated lithium-transition metal oxide particles, namely the method for coating lithium-transition metal oxide particles with the cross-linked material of the copolymer (1), is not particularly limited. In an embodiment, the method for producing the coated lithium-transition metal oxide particles preferably includes a step of heating a mixture containing lithium-transition metal oxide particles, the copolymer (1) and a polymerization initiator.

Specifically, a polymer solution in which the uncross-linked copolymer (1) is dissolved in an organic solvent, lithium-transition metal oxide particles (specifically, powder composed of the particles) and a polymerization initiator are mixed, and thus slurry is prepared. By filtering the obtained slurry under reduced pressure, the organic solvent is removed. The mixture after the filtration under reduced pressure is heated. By heating, the oxetane ring of the copolymer (1) is opened due to the action of the polymerization initiator, and thus the copolymer (1) is cross-linked. As a result, the coating layer composed of the cross-linked material of the copolymer (1) is formed on the particle surfaces of the lithium-transition metal oxide particles.

After above heating, the obtained coated lithium-transition metal oxide particles may be washed with an organic solvent. For example, after above heating, the coated lithium-transition metal oxide particles may be mixed with an organic solvent to wash off the remaining polymerization initiator, then filtered under reduced pressure to remove the organic solvent and further dried by heating.

As the polymerization initiator, a cationic polymerization initiator can be used. As the cationic polymerization initiator, an initiator which can generate an acid (activated cationic species) with heat can be used, and examples thereof include a sulfonium salt, a phosphonium salt, a quaternary ammonium salt, a diazonium salt, an iodonium salt and the like. Any one kind thereof may be used, or two or more kinds thereof may be used in combination. Of these, a sulfonium salt is preferably used.

Examples of the sulfonium salt include aromatic sulfonium salt cationic polymerization initiators such as triphenylsulfonium tetrafluoroborate, triphenylsulfonium hexafluoroantimonate, triphenylsulfonium hexafluoroarsenate, bis[4-(diphenylsulfonio)phenyl]sulfide bis(hexafluorophosphate), bis[4-(diphenylsulfonio)phenyl]sulfide bis(hexafluoroantimonate), diphenyl-4-(phenylthio)phenylsulfonium hexafluorophosphate and diphenyl-4-(phenylthio)phenylsulfonium hexafluoroantimonate.

Examples of the phosphonium salt include ethyltriphenylphosphonium hexafluoroantimonate, tetrabutylphosphonium hexafluoroantimonate and the like.

Examples of the quaternary ammonium salt include N,N-dimethyl-N-benzylanilinium hexafluoroantimonate, N,N-diethyl-N-benzylanilinium tetrafluoroborate, N,N-dimethyl-N-benzylpyridinium hexafluoroantimonate, N,N-diethyl-N-benzylpyridinium trifluoromethanesulfonate, N,N-dimethyl-N-(4-methoxybenzyl)pyridinium hexafluoroantimonate, N,N-diethyl-N-(4-methoxybenzyl)pyridinium hexafluoroantimonate and the like.

Examples of the diazonium salt include aromatic diazonium salt cationic polymerization initiators such as phenyldiazonium hexafluorophosphate, phenyldiazonium hexafluoroantimonate and phenyldiazonium tetrafluoroborate.

Examples of the iodonium salt include aromatic iodonium salt cationic polymerization initiators such as phenyliodonium hexafluorophosphate, diphenyliodonium hexafluoroantimonate and diphenyliodonium tetrafluoroborate.

Commercial products of the polymerization initiator are not particularly limited, but examples thereof include SAN-AID SI-45L, SI-60L, SI-80L, SI-100L, SI-110L, SI-150L and SI-300 (manufactured by SANSHIN CHEMICAL INDUSTRY CO., LTD.) and the like.

Regarding the amount of the polymerization initiator used, in the mixture, the amount of the polymerization initiator per total 100 parts by mass of the copolymer (1) and the polymerization initiator is preferably one to five parts by mass. When the amount of the polymerization initiator is one part by mass or more, the cross-linking density can be increased, and the effect of improving the input-output characteristics can be enhanced. The amount of the polymerization initiator is more preferably 1.5 to four parts by mass.

The organic solvent for dissolving the uncross-linked copolymer (1) is not particularly limited, and examples thereof include: aprotic solvents, such as cyclic carbonates such as ethylene carbonate (EC), propylene carbonate (PC) and butylene carbonate (BC); chain carbonates such as diethyl carbonate (DEC), dimethyl carbonate (DMC), ethyl methyl carbonate (EMC) and dipropyl carbonate (DPC); aliphatic carboxylic acid esters such as methyl formate, methyl acetate and ethyl propionate; γ-lactones such as γ-butyrolactone; chain ethers such as 1,2-diethoxyethane (DEE) and ethoxymethoxyethane (EME); cyclic ethers such as tetrahydrofuran (THF) and 2-methyltetrahydrofuran; fluorine derivatives thereof; dimethyl sulfoxide (DMSO), 1,3-dioxolane, dimethylformamide (DMF), acetonitrile, propylnitrile, nitromethane, phosphoric acid triesters, trimethoxymethane, dioxolane derivatives, sulfolane, methyl sulfolane, 1,3-dimethyl-2-imidazolidinone, 3-methyl-2-oxazolidinone, propylene carbonate derivatives, tetrahydrofuran derivatives, ethyl ether, 1,3-propane sultone, anisole, N-methylpyrrolidone and fluorinated carboxylic acid esters. Any one kind of the aprotic solvents may be used, or two or more kinds thereof may be used in combination.

In the slurry containing the uncross-linked copolymer (1), the lithium-transition metal oxide particles, the polymerization initiator and the organic solvent, the amount of the organic solvent is not particularly limited and may be, for example, per 100 mass% of the slurry, 10 to 50 mass% or 20 to 40 mass%.

### [Lithium-Ion Battery Cathode Active Material]

The lithium-ion battery cathode active material according to the embodiment contains the coated lithium-transition metal oxide particles. The lithium-ion battery cathode active material is powder containing the coated lithium-transition metal oxide particles and may be composed of the coated lithium-transition metal oxide particles only but may contain other particles in the range in which the effects thereof are not impaired.

### [Lithium-Ion Battery]

The lithium-ion battery (more accurately, lithium-ion secondary battery) according to the embodiment has a cathode, an anode and an electrolyte, and the cathode contains the lithium-ion battery cathode active material (simply called the cathode active material below). The lithium-ion battery may have a separator placed between the cathode and the anode.

The cathode at least contains the cathode active material but may have, for example, a cathode mixture layer containing the cathode active material formed on one surface or both surfaces of a collector composed of a metal such as aluminum foil.

The cathode mixture layer can be formed by applying a cathode mixture-containing paste on a collector, and performing drying, compressing and molding. The cathode mixture-containing paste can be obtained, for example, by dispersing and kneading the cathode active material in a dispersion medium such as N-methyl-2-pyrrolidone (NMP) together with a conductive additive such as carbon black and graphite and a binder such as polyvinylidene fluoride (PVDF).

The anode, the electrolyte and the separator can have known compositions and are not particularly limited.

The lithium-ion battery according to the embodiment can be formed into a cylinder, a coin, a prismatic shape or any other shape, and the basic structure of the battery is the same regardless of the shape and can be obtained with modification in the design depending on the purpose. For example, a cylindrical battery is obtained by winding an anode obtained by applying an anode active material on an anode collector and a cathode obtained by applying the cathode active material on a cathode collector with a separator between the anode and the cathode, housing the wound material in a battery can, filling with a nonaqueous electrolytic solution and sealing with insulating plates placed on top and bottom. Moreover, in application to a coin-type lithium secondary battery, a disc anode, a separator, a disc cathode and a stainless steel plate which are stuck on each other are housed in a coin-type battery can, and the can is sealed after filling with a nonaqueous electrolytic solution.

### Examples

The invention will be explained more specifically with Examples below, but the invention is not limited to the Examples below.

### [Measurement·Assessment Methods]

### (Mw and Mn of Copolymer (1))

The copolymer (1) was dissolved in tetrahydrofuran, and the weight average molecular weight (Mw) and the number average molecular weight (Mn) in terms of polystyrene were measured by gel permeation chromatography (GPC) (Prominence, manufactured by SHIMADZU CORPORATION) in which four columns containing polystyrene gel as a filler (Shodex GPC columns KF-601, KF-602, KF-603 and KF-604, manufactured by Showa Denko K.K.) were connected. The column oven temperature was 40°C, and the THF flow rate was 0.6 mL/min. The sample concentration was 0.1 mass%, and the sample introduction amount was 100 µL. A differential refractometer (Shodex RI-504, manufactured by Showa Denko K.K.) was used.

### (m/n of Copolymer (1))

The copolymer (1) was dissolved in deuterated chloroform, and the contained ratio by mole of the constituent unit 2 and the constituent unit 1 (m/n) was determined by ¹H-NMR measurement with a nuclear magnetic resonance apparatus (manufactured by JEOL).

### (Copolymer (1) Content)

The particles of the cathode active materials (coated lithium-transition metal oxide particles) of the Examples and the Comparative Examples were heated from 25°C or lower to 800°C at a heating rate of 10°C/minute in the atmosphere using a simultaneous thermogravimetry-differential thermal analysis apparatus, and thus TG-DTA curves were measured. Thus, the copolymer (1) contents in the particles of the cathode active materials were determined.

### (Discharge Characteristic Test)

The produced lithium-ion batteries were CC (constant current) charged at 0.5C current value and then CC discharged at 2C or 5C current value, and the retention rates of discharge capacity were calculated. The voltage range of charging and discharging was set at 2.8 V to 4.3 V. The retention rates of discharge capacity [%] are the ratios of the 2C or 5C discharge capacity to the 0.2C discharge capacity (2C or 5C discharge capacity/0.2 discharge capacity) obtained in the capacity examination test below.

The capacity examination test was conducted by CC charging of the lithium-ion battery at 0.2C current value and then CC discharging at 0.2C current value, and the 0.2C discharge capacity was determined. Here, the 0.2C current value refers to a current value which is 0.2 times the current value 1C, which can discharge the cell capacity in an hour.

### [Synthetic Example 1 (Synthesis of Copolymer (1))]

In a well dried 3000-mL separable flask, 165.0 g of methyl methacrylate (MMA), 55.2 g of (3-ethyl-3-oxetanyl)methyl methacrylate (OXMA) and 880.8 g of propylene carbonate were added and stirred for 90 minutes at 70°C while bubbling nitrogen, and then 0.364 g of 2,2'-azobis(isobutyronitrile) (AIBN) was added to start the reaction. After three hours and after six hours of the reaction, 0.108 g of AIBN was further added, and after continuously heating and stirring for nine hours in total, the solution was diluted with 365.9 g of propylene carbonate. The solution was dried with a molecular sieve, and thus the copolymer (1) represented by the formula (2) above was obtained as a 13 mass% solution.

The obtained copolymer (1) was a random copolymer of MMA and OXMA and had a weight average molecular weight Mw of 480,000, a number average molecular weight Mn of 132,000 and m/n of 0.19.

### [Example 1]

As the lithium-transition metal oxide particles, powder composed of lithium-containing nickel cobalt manganese oxide particles of LiNi_{0.8}Co_{0.1}Mn_{0.1}O₂ (called NCM811 powder below) was used. As the polymerization initiator, "SAN-AID SI-300" manufactured by SANSHIN CHEMICAL INDUSTRY CO., LTD. was used.

In a glass bottle, 0.39 g of the 13 mass% propylene carbonate solution of the copolymer (1) obtained in Synthetic Example 1, 0.4 g of a 0.26 mass% propylene carbonate solution of the polymerization initiator, 5 g of NCM811 powder and 1.25 g of propylene carbonate were added and stirred and mixed at 400 rpm for 12 minutes and 30 seconds, and thus a slurry was prepared. Here, the mass ratio of the copolymer (1) and the polymerization initiator is 98/2. The obtained slurry was filtered under reduced pressure to remove the solvent and then heated at 80°C for 24 hours. The obtained powder was introduced into 3 g of propylene carbonate and mixed to remove excess polymerization initiator by washing, and the solution was filtered under reduced pressure. Next, by drying at 80°C for 24 hours, a cathode active material composed of coated lithium-transition metal oxide particles of Example 1 was obtained. The particles of the obtained cathode active material had an average particle size of 11 µm and a copolymer (1) content of 1 mass%.

### [Example 2]

A cathode active material composed of coated lithium-transition metal oxide particles of Example 2 was obtained in the same manner as in Example 1, except that the amount of the 13 mass% propylene carbonate solution of the copolymer (1) was 0.78 g, the amount of the 0.26 mass% propylene carbonate solution of the polymerization initiator was 0.8 g, the amount of NCM811 powder was 5 g, and the amount of propylene carbonate was 0.8 g. The copolymer (1) content of the cathode active material of Example 2 was 2 mass%.

### [Comparative Example 1]

NCM811 powder above as it was was used as a cathode active material.

### [Comparative Example 2]

A cathode active material of Comparative Example 2 was obtained in the same manner as in Example 1, except that the 0.26 mass% propylene carbonate solution of the polymerization initiator was not added. The copolymer (1) content of the cathode active material of Comparative Example 2 was 0 mass%.

### [Production of Lithium-Ion Battery]

### (Production of Cathode)

The cathode active materials of the Examples and the Comparative Examples were used, and by mixing 93 parts by mass of the cathode active material, three parts by mass of acetylene black (manufactured by Denka Company, Li-400) as a conductive agent, three parts by mass of PVDF ("KF polymer" manufactured by KUREHA CORPORATION), which was a binder, and 67 parts by mass of N-methyl-2-pyrrolidone as a dispersion medium with a planetary mixer, cathode mixture-containing pastes having a solid content of 60 mass% were prepared.

The obtained cathode mixture-containing pastes were applied on aluminum foils (thickness of 15 µm) as collectors using a coater, then vacuum-dried at 130°C for eight hours and subjected to roll pressing, and thus cathodes were obtained.

### (Assembly of Battery)

Lithium-ion batteries for assessment in which the cathodes obtained above were used and which had a polyolefin single-layer separator as a separator to be sandwiched and a lithium foil as a counter electrode were produced.

A discharge characteristic test was conducted using the lithium-ion batteries in which a solution obtained by dissolving 1 M-LiPF₆ in EC/DMC (volume ratio of 3:7) was used as an electrolytic solution, and the retention rates of 2C discharge capacity and the retention rates of 5C discharge capacity were measured as the input-output characteristics. The charge-discharge test was conducted at 25°C, and the voltage range was set at 2.8 V-4.3 V.

**[Table 1]**

| | Comp. Ex. 1 | Comp. Ex. 2 | Ex. 1 | Ex. 2 |
|---|---|---|---|---|
| Lithium-transition metal oxide particles | NCM811 | NCM811 | NCM811 | NCM811 |
| Copolymer (1)/Polymerization initiator mass ratio | - | 100/0 | 98/2 | 98/2 |
| Copolymer (1) content (mass%) | 0 | 0 | 1 | 2 |
| Nonaqueous electrolytic solution | EC/DMC | EC/DMC | EC/DMC | EC/DMC |
| Retention rate of 2C discharge capacity (%) | 91 | 91 | 94 | 93 |
| Retention rate of 5C discharge capacity (%) | 70 | 73 | 83 | 77 |

The results are as shown in Table 1. Comparative Example 1 is an example using NCM811 powder as it was as the cathode active material as a control. In Comparative Example 2, because the polymerization initiator was not added although NCM811 powder was treated with the copolymer (1), the copolymer (1) was not cross-linked, and the copolymer (1) was removed from the particle surfaces by washing after the heating treatment. Accordingly, the effect of improving the input-output characteristics compared to those of Comparative Example 1 was not obtained. On the other hand, with the cathode active materials of Examples 1 and 2, in which a coating layer composed of the cross-linked material of the copolymer (1) was formed on the particle surfaces, the retention rate of 5C discharge capacity improved, and the input-output characteristics improved, compared to those of Comparative Example 1.

### [Example 3]

A cathode active material composed of coated lithium-transition metal oxide particles of Example 3 was obtained in the same manner as in Example 1 except for using powder composed of lithium-containing nickel cobalt manganese oxide particles of LiNi_{1/3}Co_{1/3}Mn_{1/3}O₂ (called NCM111 powder below) as the lithium-transition metal oxide particles. The particles of the cathode active material of Example 3 had an average particle size of 7 µm and a copolymer (1) content of 1 mass%. A lithium-ion battery was produced in the same manner as in Example 1 except for using the cathode active material of Example 3 as the cathode active material.

### [Comparative Example 3]

A lithium-ion battery was produced in the same manner as in Example 1 except for using NCM111 powder above as it was as the cathode active material.

A discharge characteristic test was conducted using the obtained lithium-ion batteries of Example 3 and Comparative Example 3, and the retention rates of 2C discharge capacity and the retention rates of 5C discharge capacity were measured as the input-output characteristics.

**[Table 2]**

| | Comp. Ex. 3 | Ex. 3 |
|---|---|---|
| Lithium-transition metal oxide particles | NCM111 | NCM111 |
| Copolymer (1)/Polymerization initiator mass ratio | - | 98/2 |
| Copolymer (1) content (mass%) | 0 | 1 |
| Nonaqueous electrolytic solution | EC/DMC | EC/DMC |
| Retention rate of 2C discharge capacity (%) | 86 | 94 |
| Retention rate of 5C discharge capacity (%) | 66 | 87 |

The results are as shown in Table 2. Compared to Comparative Example 3 as a control, with the cathode active material of Example 3, in which a coating layer composed of the cross-linked material of the copolymer (1) was formed on the particle surfaces, both of the retention rates of 2C discharge capacity and 5C discharge capacity improved, and the input-output characteristics improved.

### [Example 4]

A lithium-ion battery was produced in the same manner as in Example 1 except for using the cathode active material of Example 3 as the cathode active material and using a solution obtained by dissolving 1 M-LiPF₆ in EC/DEC (volume ratio of 3:7) as the electrolytic solution.

### [Example 5]

A cathode active material composed of coated lithium-transition metal oxide particles of Example 5 was obtained in the same manner as in Example 3, except that the amount of the 13 mass% propylene carbonate solution of the copolymer (1) was 1.17 g, the amount of the 0.26 mass% propylene carbonate solution of the polymerization initiator was 1.2 g, and the amount of NCM111 powder was 5 g. The copolymer (1) content in the cathode active material of Example 5 was 3 mass%. A lithium-ion battery was produced in the same manner as in Example 4 except for using the cathode active material of Example 5 as the cathode active material.

### [Comparative Example 4]

A lithium-ion battery was produced in the same manner as in Example 4 except for using NCM111 powder above as it was as the cathode active material.

A discharge characteristic test was conducted using the obtained lithium-ion batteries of Examples 4 and 5 and Comparative Example 4, and the retention rates of 2C discharge capacity and the retention rates of 5C discharge capacity were measured as the input-output characteristics.

**[Table 3]**

| | Comp. Ex. 4 | Ex. 4 | Ex. 5 |
|---|---|---|---|
| Lithium-transition metal oxide particles | NCM111 | NCM111 | NCM111 |
| Copolymer (1)/Polymerization initiator mass ratio | - | 98/2 | 98/2 |
| Copolymer (1) content (mass%) | 0 | 1 | 3 |
| Nonaqueous electrolytic solution | EC/DEC | EC/DEC | EC/DEC |
| Retention rate of 2C discharge capacity (%) | 93 | 93 | 92 |
| Retention rate of 5C discharge capacity (%) | 58 | 80 | 63 |

The results are as shown in Table 3. Compared to Comparative Example 4 as a control, with the cathode active materials of Examples 4 and 5, in which a coating layer composed of the cross-linked material of the copolymer (1) was formed on the particle surfaces, the retention rate of 5C discharge capacity improved, and the input-output characteristics improved.

In this regard, the upper limits and the lower limits of the various numerical ranges described in the specification can be combined freely, and all the combinations should be regarded as being described as preferable numerical ranges in the present specification. Moreover, a numerical range "X to Y" means X or more and Y or less.

Some embodiments of the invention are explained above, but the embodiments are provided as examples and are not intended to limit the scope of the invention. The embodiments can be carried out in various other forms, and various types of omission, substitution and change can be made within the scope which does not depart from the gist of the invention. The embodiments, omission, substitution and change thereof and the like are included in the scope and the gist of the invention as well as in the invention described in the scope of the claims and an equivalent scope thereof.

## Claims

1. A coated lithium-transition metal oxide particle
in which at least a part of the surface of a lithium-transition metal oxide particle is coated with a copolymer which is represented by the following general formula (1) and which has a weight average molecular weight of 200,000 to 600,000, 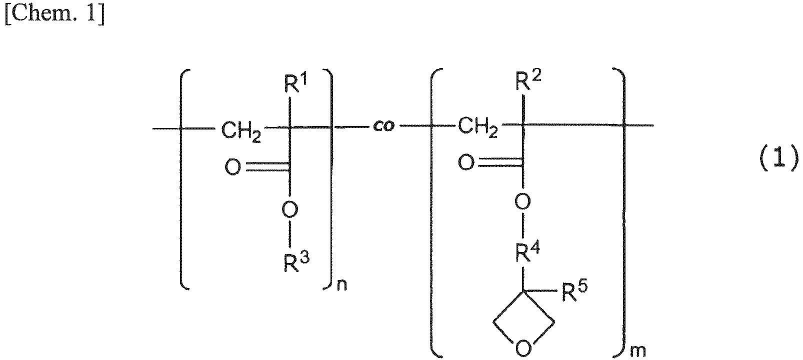
wherein in the formula (1), m and n each independently represent a number of one or more, R¹ and R² each independently represent a hydrogen atom or a methyl group, R³ represents an alkyl group having one to five carbon atoms, R⁴ represents an alkanediyl group having one to five carbon atoms, and R⁵ represents a hydrogen atom or an alkyl group having one to five carbon atoms, and
in which the copolymer is cross-linked by ring opening of an oxetane ring.

2. The coated lithium-transition metal oxide particle according to claim 1, wherein the amount of the copolymer is 0.7 to 5 mass%.

3. A lithium-ion battery cathode active material comprising the coated lithium-transition metal oxide particle according to claim 1 or 2.

4. A lithium-ion battery comprising a cathode containing the lithium-ion battery cathode active material according to claim 3.

5. A method for producing coated lithium-transition metal oxide particles comprising
a step of heating a mixture containing lithium-transition metal oxide particles, a copolymer which is represented by the following general formula (1) and which has a weight average molecular weight of 200,000 to 600,000 and a polymerization initiator, 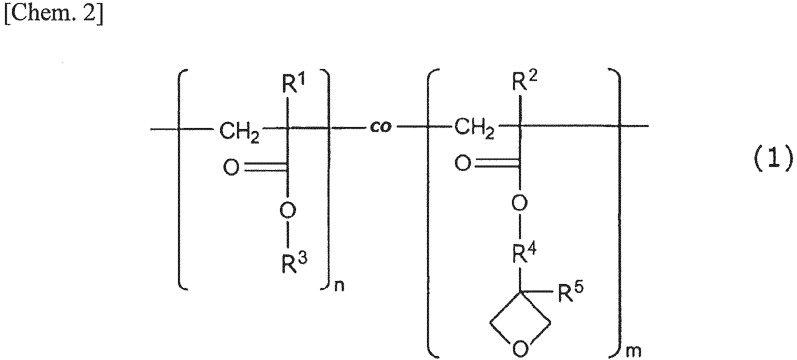 wherein in the formula (1), m and n each independently represent a number of one or more, R¹ and R² each independently represent a hydrogen atom or a methyl group, R³ represents an alkyl group having one to five carbon atoms, R⁴ represents an alkanediyl group having one to five carbon atoms, and R⁵ represents a hydrogen atom or an alkyl group having one to five carbon atoms.

6. The method for producing coated lithium-transition metal oxide particles according to claim 5, wherein the amount of the polymerization initiator per total 100 parts by mass of the copolymer and the polymerization initiator is one to five parts by mass in the mixture.

7. The method for producing coated lithium-transition metal oxide particles according to claim 5 or 6, wherein the amount of the copolymer per 100 mass% of the coated lithium-transition metal oxide particles is 0.7 to 5 mass%.
